(19) Europäisches Patentamt

European Patent Office

Office européen des brevets

(11) **EP 4 660 942 A1**

(12) **EUROPEAN PATENT APPLICATION**
published in accordance with Art. 153(4) EPC

(43) Date of publication:
**10.12.2025   Bulletin 2025/50**

(21) Application number: **24759721.4**

(22) Date of filing: **22.02.2024**

(51) International Patent Classification (IPC):
**G06T 7/10** (2017.01)

(52) Cooperative Patent Classification (CPC):
Y02T 10/40

(86) International application number:
**PCT/CN2024/078005**

(87) International publication number:
**WO 2024/175045 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **22.02.2023   CN 202310183197**

(71) Applicant: **Huawei Technologies Co., Ltd.
Shenzhen, Guangdong 518129 (CN)**

(72) Inventors:
• **WANG, Haoqing
  Shenzhen, Guangdong 518129 (CN)**

• **TANG, Yehui
  Shenzhen, Guangdong 518129 (CN)**
• **HAN, Kai
  Shenzhen, Guangdong 518129 (CN)**
• **GUO, Jianyuan
  Shenzhen, Guangdong 518129 (CN)**
• **WANG, Yunhe
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **MODEL TRAINING METHOD AND APPARATUS, AND ELECTRONIC DEVICE AND STORAGE MEDIUM**

(57)     A method and an apparatus for training a model, an electronic device, and a storage medium are provided. The method includes: dividing a training image into blocks, to obtain a plurality of first image blocks (301); performing occlusion on the plurality of first image blocks, to obtain a plurality of second image blocks, where the plurality of second image blocks are unoccluded first image blocks in the plurality of first image blocks (302); inputting a feature vector of each second image block into an encoding network to perform encoding, to obtain a plurality of encoding features corresponding to a plurality of network blocks, where the plurality of network blocks are in a one-to-one correspondence with the plurality of encoding features (303); inputting each encoding feature into a decoding network corresponding to each encoding feature to perform image reconstruction, to obtain a reconstructed image corresponding to each decoding network (304); and training the model based on the reconstructed image corresponding to each decoding network and supervision information corresponding to each decoding network (305). This helps improve model training efficiency.

[FIG. 3]

## Description

This application claims priority to Chinese Patent Application No. 202310183197.6, filed with the China National Intellectual Property Administration on February 22, 2023 and entitled "METHOD AND APPARATUS FOR TRAINING MODEL, ELECTRONIC DEVICE, AND STORAGE MEDIUM", which is incorporated herein by reference in its entirety.

## TECHNICAL FIELD

The present invention relates to the field of artificial intelligence technologies, and specifically, to a method and an apparatus for training a model, an electronic device, and a storage medium.

## BACKGROUND

In recent years, self-supervised visual representation learning has attracted widespread attention and developed rapidly. Research value of the self-supervised visual representation learning lies in that generalized representations can be learned from nearly free massive unlabeled data to improve representations of various downstream tasks, such as classification, detection, and segmentation. This learning manner does not require high labeling costs and therefore has a broad application prospect.

With emergence and rapid development of visual self-attention networks, mask image modeling has attracted more attention. The self-supervised visual representation learning uses a mask image modeling method that is based on a "mask-reconstruction" agent task to train a model. When this method is used to perform the self-supervised visual representation learning, a part of an input image is first randomly occluded, then image reconstruction is performed based on an unoccluded part to predict an occluded part, and finally the self-supervised visual representation learning is performed based on the predicted occluded part and the really occluded part. However, this self-supervised visual representation learning method based on "mask-reconstruction" is mainly to perform image reconstruction by using a final output feature of an encoder, and an entire learning process is slow.

## SUMMARY

This application provides a method and an apparatus for training a model, an electronic device, and a storage medium, to perform image reconstruction by using feature vectors with different scales, guide self-supervised visual representation learning, and improve learning efficiency and model training efficiency.

According to a first aspect, an embodiment of this application provides a method for training a model. The model includes an encoding network and a plurality of decoding networks, the encoding network includes a plurality of network blocks at different depths, each network block corresponds to one decoding network in the plurality of decoding networks, and each network block includes one or more network layers. The method includes: dividing a training image into blocks, to obtain a plurality of first image blocks; performing occlusion on the plurality of first image blocks, to obtain a plurality of second image blocks, where the plurality of second image blocks are unoccluded first image blocks in the plurality of first image blocks; inputting a feature vector of each second image block into the encoding network to perform encoding, to obtain a plurality of encoding features corresponding to the plurality of network blocks, where the plurality of network blocks are in a one-to-one correspondence with the plurality of encoding features; inputting each encoding feature into a decoding network corresponding to each encoding feature to perform image reconstruction, to obtain a reconstructed image corresponding to each decoding network; and training the model based on the reconstructed image corresponding to each decoding network and supervision information corresponding to each decoding network.

It can be learned that, in this embodiment of this application, when self-supervised visual representation learning is performed, corresponding decoding networks are designed for network layers at different depths in an encoding network. That is, a plurality of decoding networks are designed. Then, each decoding network is used to perform image reconstruction, to obtain reconstruction of each decoding network. In this way, output features of network layers at different depths in the decoding network are used to perform the image reconstruction (in other words, a lower-layer feature and an upper-layer feature that are output by the encoding network are used to perform the image reconstruction). Finally, a model is trained based on a reconstructed image and supervision information of each decoding network. In this application, the self-supervised visual representation learning is performed by using features with different scales output by the encoding network instead of only a top-layer feature (a feature output by a last network layer), so that more detailed features can be used for the learning to improve learning efficiency and model training efficiency, and identification accuracy of the trained model is high.

In an implementation of this application, the performing occlusion on the plurality of first image blocks, to obtain a plurality of second image blocks includes: generating an index value corresponding to each first image block, where the index value of each first image block indicates whether each first image block is occluded; and performing the occlusion on the plurality of first image blocks based on the index value of each first image block, to obtain the plurality of second image blocks.

It can be learned that, in this implementation of this application, when occlusion is performed on a plurality of first image blocks, the occlusion is performed on the plurality of first image blocks by randomly constructing index values. The random occlusion eliminates redundancy to a large extent, and a task that cannot be easily resolved by extrapolating from a visible adjacent patch is generated, thereby avoiding model convergence caused by a special case and improving model training precision.

In an implementation of this application, before the training the model based on the reconstructed image corresponding to each decoding network and supervision information corresponding to each decoding network, the method further includes: obtaining a block division scale corresponding to each decoding network, where a smaller depth of a network block corresponding to a decoding network indicates a smaller block division scale corresponding to the decoding network; dividing the training image into blocks based on the block division scale corresponding to each decoding network, to obtain a plurality of third image blocks corresponding to each decoding network; and using the plurality of third image blocks corresponding to each decoding network as the supervision information of each decoding network.

It can be learned that, in this embodiment of this application, supervision information corresponding to a depth of each decoding network is constructed for each decoding network. In other words, model training is performed by using multi-scale supervision information. In addition, a decoding network at a smaller depth corresponds to a finer scale of the supervision information. In this way, it is more likely to capture feature information output by a lower-layer encoding network layer, and a lower-layer encoding network can be better trained, to further improve the model training efficiency and improve identification precision of the model.

In an implementation of this application, the reconstructed image corresponding to each decoding network includes a plurality of fourth image blocks, and the training the model based on the reconstructed image corresponding to each decoding network and supervision information corresponding to each decoding network includes: determining a third image block corresponding to each fourth image block in the plurality of fourth image blocks corresponding to each decoding network based on the plurality of third image blocks in the supervision information of each decoding network; determining a loss of each decoding network based on each fourth image block corresponding to each decoding network and the third image block corresponding to the fourth image block; and training the model based on the loss of each decoding network.

It can be learned that, in this embodiment of this application, after the corresponding supervision information is constructed for each decoding, a loss of each decoding network is determined based on the supervision information of each decoding network, so that the loss of each decoding network is more consistent with a real loss, and the model training precision is improved.

In an implementation of this application, before the determining a loss of each decoding network based on each fourth image block corresponding to each decoding network and the third image block corresponding to the fourth image block, the method further includes: generating a first index value vector based on the index value of each first image block; and inputting the first index value vector into the model, to obtain a second index value vector corresponding to each decoding network. The determining a loss of each decoding network based on a fourth image block corresponding to each decoding network and the third image block corresponding to the fourth image block includes: determining an index value of each fourth image block corresponding to each decoding network based on the second index value vector corresponding to each decoding network, where the index value of each fourth image block indicates whether real content corresponding to each fourth image block is occluded; and determining the loss corresponding to each decoding network based on each fourth image block corresponding to each decoding network, the index value corresponding to the fourth image block, and the third image block corresponding to the fourth image block.

It can be learned that, in this embodiment of this application, in a model training process, index values of the first image blocks are synchronously transmitted to the model to perform upsampling and/or downsampling. In this way, an index value of each image block in a reconstructed image can be determined. In other words, an occluded image block in the reconstructed image is determined, so that loss calculation can be performed by using only the occluded image block, to improve efficiency and precision of the loss calculation and further improve the model training precision and efficiency.

In an implementation of this application, the loss corresponding to each decoding network is determined based on feature information of each fourth image block corresponding to each decoding network and feature information of the third image block corresponding to the fourth image block. Feature information of an image block A is one of the following: a pixel value of each pixel in the image block A, a histogram of oriented gradients of the image block A, or a normalized pixel value of the image block A. The image block A is a fourth image block corresponding to each decoding network or a third image block corresponding to the fourth image block.

It can be learned that, in this embodiment of this application, a plurality of form features of an image block may be used as supervision information, to improve diversity of the loss calculation and diversity of model training.

In an implementation of this application, the method further includes: after training of the model is completed, using the encoding network as a backbone network for a downstream identification task, where the downstream identification task includes one of the following: pedestrian attribute identification, image segmentation, and image classification.

It can be learned that, because identification precision of the trained model in this application is high, identification precision of a downstream identification task can be improved by using the encoding network in this application as a backbone network for the downstream identification task.

According to a second aspect, an embodiment of this application provides an apparatus for training a model. The model includes an encoding network and a plurality of decoding networks, the encoding network includes a plurality of network blocks at different depths, each network block corresponds to one decoding network in the plurality of decoding networks, and each network block includes one or more network layers. The apparatus for training the model includes an obtaining unit and a processing unit. The obtaining unit is configured to obtain a training image. The processing unit is configured to: divide the training image into blocks, to obtain a plurality of first image blocks; perform occlusion on the plurality of first image blocks, to obtain a plurality of second image blocks, where the plurality of second image blocks are unoccluded first image blocks in the plurality of first image blocks; input a feature vector of each second image block into the encoding network to perform encoding, to obtain a plurality of encoding features corresponding to the plurality of network blocks, where the plurality of network blocks are in a one-to-one correspondence with the plurality of encoding features; input each encoding feature into a decoding network corresponding to each encoding feature to perform image reconstruction, to obtain a reconstructed image corresponding to each decoding network; and train the model based on the reconstructed image corresponding to each decoding network and supervision information corresponding to each decoding network.

In an implementation of this application, in the aspect of performing the occlusion on the plurality of first image blocks, to obtain the plurality of second image blocks, the processing unit is specifically configured to: generate an index value corresponding to each first image block, where the index value of each first image block indicates whether each first image block is occluded; and perform the occlusion on the plurality of first image blocks based on the index value of each first image block, to obtain the plurality of second image blocks.

In an implementation of this application, before the processing unit trains the model based on the reconstructed image corresponding to each decoding network and the supervision information corresponding to each decoding network, the processing unit is further configured to: obtain a block division scale corresponding to each decoding network, where a smaller depth of a network block corresponding to a decoding network indicates a smaller block division scale corresponding to the decoding network; divide the training image into blocks based on the block division scale corresponding to each decoding network, to obtain a plurality of third image blocks corresponding to each decoding network; and use the plurality of third image blocks corresponding to each decoding network as the supervision information of each decoding network.

In an implementation of this application, the reconstructed image corresponding to each decoding network includes a plurality of fourth image blocks. In the aspect of training the model based on the reconstructed image corresponding to each decoding network and the supervision information corresponding to each decoding network, the processing unit is specifically configured to: determine a third image block corresponding to each fourth image block in the plurality of fourth image blocks corresponding to each decoding network based on the plurality of third image blocks in the supervision information of each decoding network; determine a loss of each decoding network based on each fourth image block corresponding to each decoding network and the third image block corresponding to the fourth image block; and train the model based on the loss of each decoding network.

In an implementation of this application, before the processing unit determines the loss of each decoding network based on each fourth image block corresponding to each decoding network and the third image block corresponding to the fourth image block, the processing unit is further configured to: generate a first index value vector based on the index value of each first image block; and input the first index value vector into the model, to obtain a second index value vector corresponding to each decoding network. In the aspect of determining the loss of each decoding network based on the fourth image block corresponding to each decoding network and the third image block corresponding to the fourth image block, the processing unit is specifically configured to: determine an index value of each fourth image block corresponding to each decoding network based on the second index value vector corresponding to each decoding network, where the index value of each fourth image block indicates whether real content corresponding to each fourth image block is occluded; and determine the loss corresponding to each decoding network based on each fourth image block corresponding to each decoding network, the index value corresponding to the fourth image block, and the third image block corresponding to the fourth image block.

In an implementation of this application, the loss corresponding to each decoding network is determined based on feature information of each fourth image block corresponding to each decoding network and feature information of the third image block corresponding to the fourth image block. Feature information of an image block A is one of the following: a pixel value of each pixel in the image block A, a histogram of oriented gradients of the image block A, or a normalized pixel value of the image block A. The image block A is a fourth image block corresponding to each decoding network or a third image block corresponding to the fourth image block.

In an implementation of this application, the processing unit is further configured to: after training of the model is completed, use the encoding network as a backbone network for a downstream identification task, where the downstream identification task includes one of the following: pedestrian attribute identification, image segmentation, and image classification.

According to a third aspect, an embodiment of this application provides an electronic device, including: a memory, configured to store a program; and a processor, configured to execute the program stored in the memory. When the program stored in the memory is executed, the processor is configured to implement the method according to the first aspect.

According to a fourth aspect, an embodiment of this application provides a computer-readable medium. The computer-readable medium stores program code to be executed by a device, and the program code is used to implement the method according to the first aspect.

According to a fifth aspect, an embodiment of this application provides a computer program product including instructions. When the computer program product is run on a computer, the computer is enabled to implement the method according to the first aspect.

BRIEF DESCRIPTION OF DRAWINGS

FIG. 1 is a diagram of image reconstruction according to an embodiment of this application;
FIG. 2 is a diagram of a structure of a model according to an embodiment of this application;
FIG. 3 is a schematic flowchart of a method for training a model according to an embodiment of this application;
FIG. 4 is a diagram of performing block division and occlusion on a training image according to an embodiment of this application;
FIG. 5 is a diagram of constructing supervision information with different scales according to an embodiment of this application;
FIG. 6 is a diagram of constructing an index value matrix according to an embodiment of this application;
FIG. 7 is a diagram of model training according to an embodiment of this application;
FIG. 8 is a diagram of an apparatus for training a model according to an embodiment of this application; and
FIG. 9 is a diagram of an electronic device according to an embodiment of this application.

DESCRIPTION OF EMBODIMENTS

For ease of understanding of this application, technical knowledge related to this application is first described.

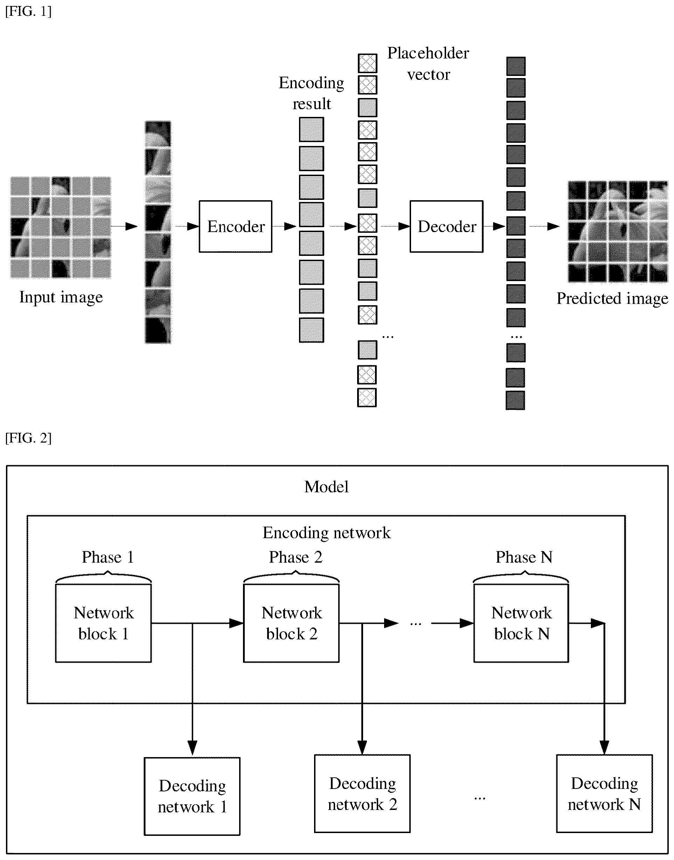

As shown in FIG. 1, currently, when self-supervised visual representation learning is performed, an input image is first divided into blocks, to obtain a plurality of image blocks. Then, random occlusion is performed on the plurality of image blocks, features are extracted from unoccluded image blocks, and the extracted features are input into an encoder of a model to perform encoding, to obtain an encoding result. To be specific, an output of a last layer of the encoder is used as the encoding result. For occluded image blocks, placeholder vectors are added to the encoding result, to obtain input data of a decoder. The input data is input into the decoder to perform image reconstruction, to obtain a predicted image. Finally, a loss is calculated based on the predicted image and the input image, the model is trained based on the loss, and the self-supervised visual representation learning is completed when the model converges.

However, in the foregoing self-supervised visual representation learning method, during the image reconstruction, an output of a top layer of the encoder is mainly used to perform the image reconstruction. In other words, an output of a last network layer of the encoder is used to perform the image reconstruction. In this case, during the self-supervised visual representation learning, only a feature extracted by a deeper network layer of the model is used, resulting in a slow learning process of a lower layer. Consequently, a process of the self-supervised visual representation learning is slow, and efficiency is low. Therefore, how to improve the efficiency of the self-supervised visual representation learning is a technical issue to be urgently resolved currently.

First, it is noted that an encoding network in this application may also be understood as an encoder, and a decoding network may also be understood as a decoder.

FIG. 2 is a diagram of a structure of a model according to an embodiment of this application. As shown in FIG. 2, the model includes an encoding network and a plurality of decoding networks. The encoding network includes a plurality of network blocks, and depths of the plurality of network blocks are different, for example, a network block 1, a network block 2, ..., and a network block N and a decoding network 1, a decoding network 2, ..., and a decoding network N shown in FIG. 2.

Optionally, each network block includes one or more network layers in the decoding network. In other words, one or more network layers in the decoding network are used as one network block. Further, an encoding process of each network block may be referred to as one phase. In other words, the plurality of network blocks split an entire encoding process of the encoding network into a plurality of phases (a phase 1, a phase 2, ..., and a phase N shown in FIG. 2). A last network layer in each phase is connected to a decoding network.

Optionally, the plurality of network blocks correspond to one decoding network in the plurality of decoding networks. As shown in FIG. 2, a last network layer of each network block is connected to a decoding network corresponding to the network block.

For example, the encoding network may be various types of encoding networks, such as a ViT encoding network or a Swin encoding network. It should be noted that, if the used encoding network itself, for example, a Swin encoding network, is divided into phases, that is, the encoding network itself includes a plurality of network blocks, the network blocks included in the encoding network may be used as the foregoing plurality of network blocks. If the encoding network, for example, a ViT encoding network, is not divided into phases, block division may be first performed on a plurality of network layers of the encoding network, to obtain the plurality of network blocks.

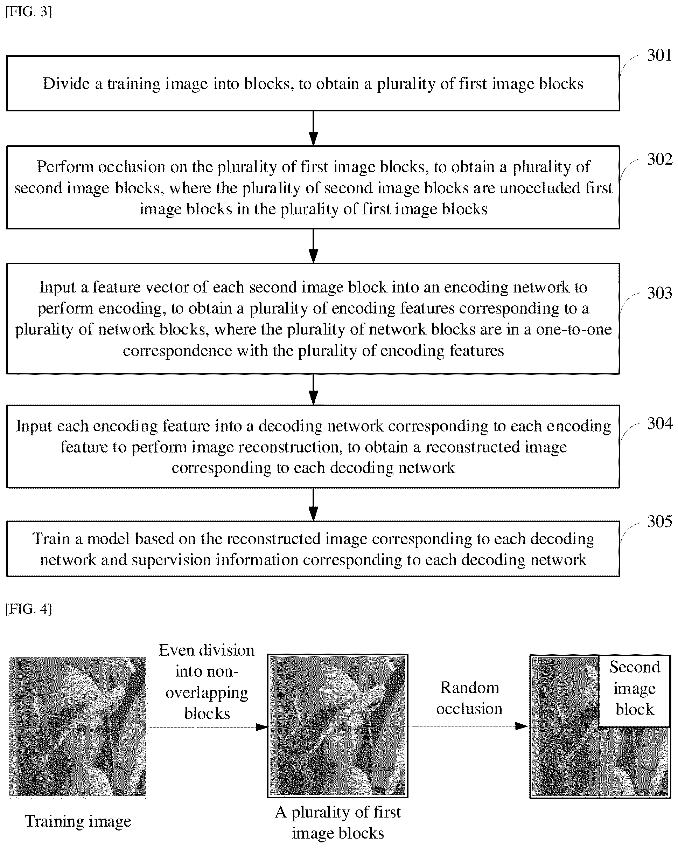

FIG. 3 is a schematic flowchart of a method for training a model according to an embodiment of this application. The model is the model shown in FIG. 2. The method includes but is not limited to the following steps.

301: Divide a training image into blocks, to obtain a plurality of first image blocks.

Optionally, as shown in FIG. 4, a training image is evenly divided into non-overlapping blocks, to obtain a plurality of first image blocks.

302: Perform occlusion on the plurality of first image blocks, to obtain a plurality of second image blocks, where the plurality of second image blocks are unoccluded first image blocks in the plurality of first image blocks.

For example, as shown in FIG. 4, random occlusion is performed on the plurality of first image blocks, to obtain a plurality of second image blocks. For ease of distinguishing, in this application, an unoccluded first image block in the plurality of first image blocks is referred to as a second image block.

For example, an index value corresponding to each first image block is generated. The index value of each first image block indicates whether each first image block is occluded. Optionally, the index value of each first image block is randomly generated from 0 and 1. For example, when the index value is 0, it indicates that the first image block is unoccluded, or when the index value is 1, it indicates that the first image block is occluded. The occlusion is performed on the plurality of first image blocks based on the index value corresponding to each first image block, to obtain the plurality of second image blocks.

303: Input a feature vector of each second image block into an encoding network to perform encoding, to obtain a plurality of encoding features corresponding to a plurality of network blocks, where the plurality of network blocks are in a one-to-one correspondence with the plurality of encoding features.

Optionally, after the training image is divided into blocks, embedding is performed on each first image block, to obtain an embedding vector of each first image block. Then, positional encoding is added to the embedding vector of each first image block, to obtain a feature vector of each first image block. In this case, after the occlusion is performed on the plurality of first image blocks, the feature vector of each second image block may be directly input into the encoding network to perform encoding. In other words, only a feature vector of an unoccluded first image block is input.

Optionally, after the training image is divided into blocks, the occlusion is first performed on the plurality of first image blocks, instead of directly performing embedding on each first image block. Then, embedding is performed on each second image block, to obtain an embedding vector of each second image block, and positional encoding is added to the embedding vector of each second image block, to obtain the feature vector of each second image block. Finally, the feature vector of each second image block is input into the encoding network to perform encoding.

For example, the feature vector of each second image block is input into the encoding network to perform encoding, and the feature vector is encoded by using the plurality of network blocks in the encoding network, to obtain the plurality of encoding features corresponding to the plurality of network blocks. To be specific, an output of a last network layer of each network block is used as an encoding feature corresponding to each network block.

304: Input each encoding feature into a decoding network corresponding to each encoding feature to perform image reconstruction, to obtain a reconstructed image corresponding to each decoding network.

For example, an encoding feature output by each network block is input into a decoding network corresponding to the network block to perform image reconstruction, to obtain the reconstructed image corresponding to each decoding network.

Specifically, a placeholder vector is added to an encoding feature (that is, a feature vector sequence) corresponding to each decoding network, to generate a new encoding feature (that is, a new feature vector). The placeholder vector is obtained through pre-learning, is a shared learning vector, and indicates that there is a to-be-predicted occluded image block at a location corresponding to the placeholder vector. Then, positional encoding is added to the new encoding feature corresponding to each decoding network, to obtain input data corresponding to each decoding network. Finally, the input data corresponding to each decoding network is input into each decoding network to perform image reconstruction, to obtain the reconstructed image corresponding to each decoding network.

305: Train the model based on the reconstructed image corresponding to each decoding network and supervision information corresponding to each decoding network.

For example, a loss corresponding to each decoding network is determined based on the reconstructed image corresponding to each decoding network and the supervision information corresponding to each decoding network, and the model is trained based on the loss corresponding to each decoding network.

For example, because the decoding network is to reconstruct the training image, and in this application, the training image is divided into the plurality of first image blocks to be input into the model to perform image reconstruction, reconstruction of the training image may also be understood as reconstruction of image blocks, and the reconstructed image corresponding to each decoding network includes a plurality of fourth image blocks. Correspondingly, the supervision information corresponding to each decoding network is supervision information corresponding to the plurality of fourth image blocks of each decoding network. Therefore, the loss corresponding to each decoding network is determined based on each fourth image block in the reconstructed image corresponding to each decoding network and supervision information corresponding to each fourth image block.

The following describes a process of obtaining the supervision information corresponding to each decoding network.

Scenario 1: The supervision information of each decoding network has a different scale.

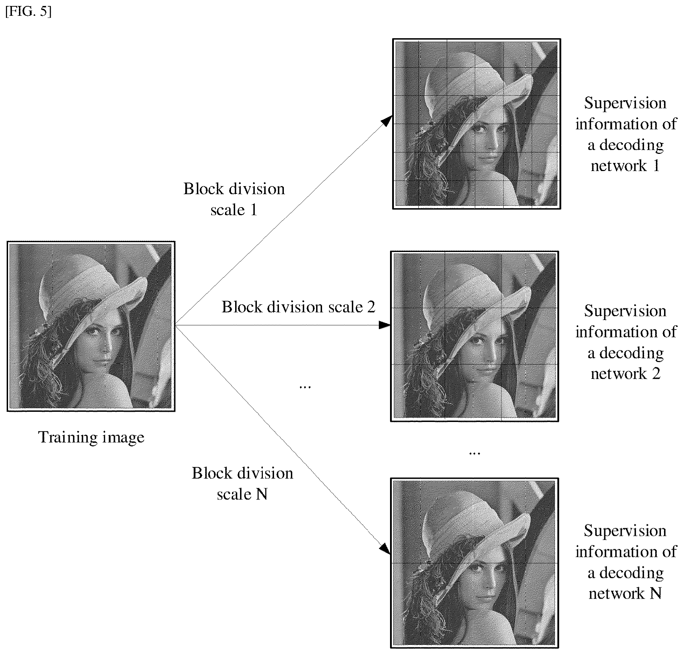

For example, when the supervision information of each decoding network has a different scale, a block division scale corresponding to each decoding network is obtained. A smaller depth of a network block corresponding to a decoding network indicates a smaller block division scale corresponding to the decoding network. As shown in FIG. 2, a block division scale of the decoding network 1 is less than a block division scale of the decoding network 2. The training image is divided into blocks based on the block division scale corresponding to each decoding network, to obtain a plurality of third image blocks corresponding to each decoding network. To be specific, the training image is evenly divided into non-overlapping blocks based on the block division scale corresponding to each decoding network, to obtain the plurality of third image blocks corresponding to each decoding network. The plurality of third image blocks corresponding to each decoding network are used as the supervision information of each decoding network. For example, as shown in FIG. 5, the training image is divided into blocks based on a block division scale 1, a block division scale 2, ..., and a block division scale N corresponding to the decoding network 1, the decoding network 2, ..., and the decoding network N, to obtain supervision information corresponding to the decoding network 1, the decoding network 2, ..., and the decoding network N. After the training image is divided into blocks based on the block division scale of each decoding network, a decoding network at a larger depth corresponds to a larger size of a third image block and a smaller quantity of third image blocks.

In addition, the plurality of fourth image blocks in the reconstructed image of each decoding network are in a one-to-one correspondence with the plurality of third image blocks corresponding to each decoding network. In this case, a third image block corresponding to each fourth image block in the plurality of fourth image blocks corresponding to each decoding network may be determined based on the plurality of third image blocks in the supervision information of each decoding network (in other words, supervision information of each fourth image block is determined). Then, a loss of each decoding network is determined based on each fourth image block corresponding to each decoding network and the third image block corresponding to the fourth image block. In other words, the loss of each decoding network is obtained based on a loss between each fourth image block corresponding to each decoding network and the third image block corresponding to the fourth image block. The loss between each fourth image block and the third image block corresponding to the fourth image block may be a cross-entropy loss between the two image blocks.

It can be learned that, supervision information with a different scale is designed for each decoding network, and specifically, a decoding network at a smaller depth indicates a finer granularity of the supervision information, so that a loss can be calculated by using feature information with a finer scale. In this way, accuracy of a calculated loss of each decoding network is high, thereby improving training efficiency and accuracy of the model.

It should be noted that, when the supervision information of each decoding network is designed to have a different scale, sizes of the plurality of fourth image blocks in the reconstructed image output by each decoding network are designed to be the same as sizes of the plurality of third image blocks. It should be noted that, input data for each decoding network to perform image reconstruction comes from the decoding network. To be specific, a quantity of blocks in a reconstructed image depends on a quantity of blocks in the training image. Therefore, to make a size of a fourth image block the same as a size of a third image block, during image reconstruction, a decoding network needs to perform corresponding upsampling or downsampling based on a size of a third image block corresponding to the decoding network, so that a size of a reconstructed fourth image block is the same as the size of the third image block. For example, a size of the training image is 20*20, and a size of the first image block is 10*10. If no upsampling or downsampling process is designed for a decoding network, a size of a block in a reconstructed image is also 10*10. If a size of a third image block corresponding to the decoding network is 5*5, an upsampling process needs to be performed during image reconstruction, to make the size of the block in the reconstructed image be 5*5.

In an actual application, the model may be trained by calculating only a loss between occluded content in the training image and predicted content. Therefore, for each decoding network, a target fourth image block in the plurality of fourth image blocks corresponding to each decoding network may be determined. Content corresponding to the target fourth image block is occluded. **In** other words, real content of the target fourth image block in the training image is occluded. A loss between the target fourth image block corresponding to each decoding network and a third image block corresponding to the target fourth image block is determined, to obtain a loss of each decoding network. Finally, the model is trained based on the loss of each decoding network.

In an implementation of this application, the target fourth image block in the plurality of fourth image blocks corresponding to each decoding network may be determined based on an index value. For example, an index value of each fourth image block corresponding to each decoding network is obtained. The index value of each fourth image block indicates whether real content corresponding to each fourth image block is occluded. For example, if an index value of a fourth image block is 0, it indicates that real content corresponding to the fourth image block is unoccluded, or if the index value of the fourth image block is 1, it indicates that the real content corresponding to the fourth image block is occluded. The target fourth image block in the plurality of fourth image blocks corresponding to each decoding network is determined based on the index value of each fourth image block.

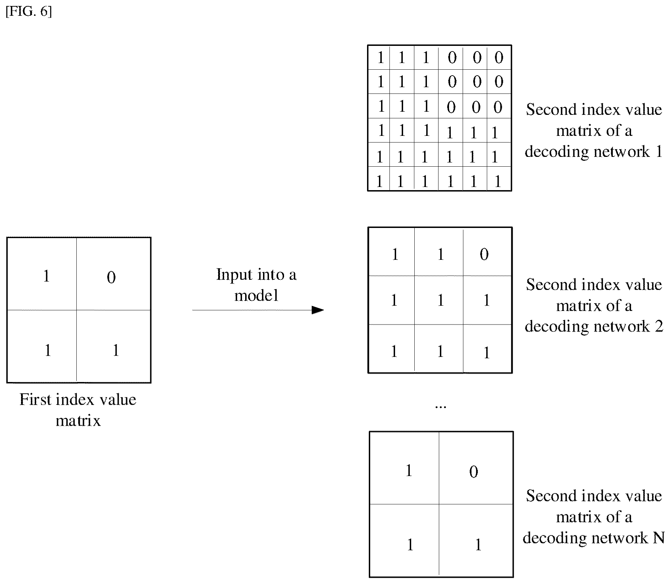

Specifically, as shown in FIG. 6, after the index value corresponding to each first image block is generated, a first index value matrix may be generated based on the index value corresponding to each first image block. The first index value matrix is a square matrix, and a product of a length and a width of the first index value matrix is a quantity of first image blocks. Therefore, an index value in an $i^{th}$ row and a $j^{th}$ column in the first index value is an index value of a first image block in an $i^{th}$ row and a $j^{th}$ column in the plurality of first image blocks. Then, the first index value matrix is tiled to obtain a first index value vector, and when the feature vector of the second image block is input, the first index value vector is synchronously input into the model. To be specific, the first index value vector is encoded (downsampled) by the decoding network and decoded (that is, downsampled) by the decoding networks, to obtain a second index value vector corresponding to each decoding network. Next, the second index value vector is reshaped to obtain a second index value matrix corresponding to each decoding network. The second index value matrix is a square matrix, and a product of a length and a width of the second index value matrix is a quantity of fourth image blocks. Correspondingly, an element in an $i^{th}$ row and a $j^{th}$ column in the second index value matrix corresponding to each decoding network is an index value of a fourth image block in an $i^{th}$ row and a $j^{th}$ column in the plurality of fourth image blocks corresponding to each decoding network. Then, the index value corresponding to each fourth image block corresponding to each decoding network is determined based on the second index value matrix. The target fourth image block in the plurality of fourth image blocks corresponding to each decoding network may be determined based on the index value corresponding to each fourth image block corresponding to each decoding network.

In an implementation of this application, after the index value of each fourth image block is determined, a loss corresponding to each decoding network may be further determined directly based on each fourth image block corresponding to each decoding network, the index value corresponding to the fourth image block, and the third image block corresponding to the fourth image block.

For example, when an index value is used, the loss corresponding to each decoding network may be expressed by using Formula (1):

$$L_i^l = \sum_{i=1}^{N_l} m_i^l * lnP\left(y_i^l / \overline{y_i^l}\right) \text{ Formula (1)}$$

Herein, $L_i^l$ is a loss of an $l^{th}$ decoding network, i indicates an $i^{th}$ fourth image block in a plurality of fourth image blocks corresponding to the $l^{th}$ decoding network, $m_i^l$ is an index value corresponding to the $i^{th}$ fourth image block, $y_i^l$ is supervision information corresponding to the $i^{th}$ fourth image block, that is, a third image block corresponding to the $i^{th}$ fourth image block, $\overline{y_i^l}$ is the $i^{th}$ fourth image block, and $lnP\left(y_i^l / \overline{y_i^l}\right)$ indicates a cross-entropy loss between the $i^{th}$ fourth image block and the supervision information corresponding to the $i^{th}$ fourth image block.

It can be learned that, based on the index value of each fourth image block, only a fourth image block with an index value of 1 (that is, the foregoing target fourth image block) is involved in loss calculation, so that only a loss between occluded content and predicted content is calculated, thereby accelerating loss calculation and improving calculation efficiency.

In an implementation of this application, a loss of each decoding network may be determined based on a loss between feature information of each fourth image block corresponding to each decoding network and feature information of a third image block corresponding to the fourth image block. The feature information of each fourth image block may be a pixel value of each pixel in the fourth image block, and correspondingly, the feature information of the third image block corresponding to the fourth image block is a pixel value of each pixel in the third image block. In this case, the loss of each decoding network may be obtained by calculating a cross-entropy loss between pixel values of pixels in the fourth image block and the third image block. Alternatively, the feature information of the fourth image block is a histogram of oriented gradients of the fourth image block, and correspondingly, the feature information of the third image block corresponding to the fourth image block is a histogram of oriented gradients of the third image block. In this case, the loss of each decoding network may be obtained by calculating a cross-entropy loss between histograms of oriented gradients of the fourth image block and the third image block. Alternatively, the feature information of the fourth image block is a normalized pixel value of the fourth image block, and correspondingly, the feature information of the third image block is a normalized pixel value of the third image block. Feature information of an image block is not limited in this application.

Scenario 2: The supervision information of each decoding network has a same scale.

Optionally, the supervision information of each decoding network has a same scale. In other words, supervision information corresponding to a fourth image block reconstructed by each decoding network has a same size.

For example, in this application, a training image after block division may be used as the supervision information of each decoding network. In other words, the plurality of first image blocks are used as the supervision information of each decoding network. Certainly, in an actual application, the training image may be divided into blocks by using a new block division scale, to obtain a plurality of fifth image blocks, and then the plurality of fifth image blocks are used as the supervision information of each decoding network. In this application, an example in which the plurality of first image blocks are used as the supervision information of each decoding network is used for description.

Then, a first image block (supervision information) corresponding to each fourth image block corresponding to each decoding network is obtained. A loss of each decoding network is determined based on each fourth image block corresponding to each decoding network and the first image block corresponding to the fourth image block. To be specific, a loss between each fourth image block of each decoding network and the first image block is determined, to obtain the loss of each decoding network. Similarly, the loss of each decoding network may be determined based on an index value of each fourth image block of each decoding network, provided that supervision information of each fourth image block is changed from the third image block to the first image block. Reference may be made to Formula (1), and details are not described again.

It should be noted that, if the encoding network changes a size of input data, for example, performs downsampling on the input data, input data of each decoding network has a different size. In this case, to make a fourth image block reconstructed by each decoding network have a same size, the decoding networks perform corresponding upsampling, so that the fourth image block reconstructed by each decoding network has the same size and has a same size as the first image block.

In an implementation of this application, after the loss of each decoding network is obtained, overall training may be performed on the model based on the loss of each decoding network. For example, after the loss of each decoding network is obtained, losses of the plurality of decoding networks are weighted according to a weight of each decoding network, to obtain a target loss. The model is trained based on the target loss, and training of the model is completed when the model converges.

For example, the target loss may be expressed by using Formula (2):

$$L_{LaMSR} = -\sum_{l \in \varphi} w_l * \sum_{i=1}^{N_l} m_i^l * lnP\left(y_i^l \big/ \overline{y_i^l}\right) \text{ Formula (2)}$$

Herein, $L_{LaMSR}$ is the target loss, l is an l-th network layer of the model, $w_l$ is a weight of the l-th network layer, $\varphi$ indicates a network layer set formed by last network layers of the plurality of network blocks, and $\sum_{l \in \varphi} w_l$ indicates weighted summation of the losses of the plurality of decoding networks.

In an implementation of this application, after the loss of each decoding network is obtained, layer-wise training, that is, greedy training (greedy training), may be performed on the model based on the loss of each decoding network.

The following describes a reason why the layer-wise training can be performed in this application.

First, when the decoding network is ViT-B or Swin-B, gradient-isolated training is performed on the model in this application (that is, a local multi-scale reconfiguration (Local Multi-Scale Reconfiguration, LaSMR) model); and the gradient-isolated training is not performed and overall training is performed on the LaSMR model in this application. Then, training duration (that is, average time consumed by an image processor) and accuracy (acc) of the model in the two training modes are obtained. Table 1 shows the training duration and the accuracy in the two training modes.

Table 1

| Whether gradient-isolated training is performed (w/isolated grad) | Encoding network | Average time consumed by an image processor | Accuracy (acc) |
|---|---|---|---|
| No | ViT-B | 0.7 | 83.3 |
| Yes | ViT-B | 0.7 | 83.0 |
| No | Swin-B | 1.1 | 83.8 |

(continued)

| Whether gradient-isolated training is performed (w/isolated grad) | Encoding network | Average time consumed by an image processor | Accuracy (acc) |
|---|---|---|---|
| Yes | Swin-B | 1.1 | 83.7 |

It can be learned from Table 1 that, when the encoding network is ViT-B, training duration required when the gradient-isolated training is performed on the LaSMR model is the same as training duration required when the gradient-isolated training is not performed, and accuracy is also the same. When the encoding network is Swin-B, training duration required when the gradient-isolated training is performed on the LaSMR model is the same as training duration required when the gradient-isolated training is not performed, and accuracy is very close. It can be learned from Table 1 that, when the gradient-isolated training is performed on the model in this application, training duration of the model is not increased, and accuracy of the model is not reduced. In other words, the gradient-isolated training can be performed on the model in this application. Therefore, the model in this application supports the layer training.

Table 2 shows a training result obtained when the layer-wise training is performed on the model in this application.

Table 2

| Whether greedy training is performed (w/greedy training) | Encoding network | Average time consumed by an image processor | Memory size (memory) | Accuracy (acc) |
|---|---|---|---|---|
| No | ViT-B | 0.7 | 17.6G | 83.3 |
| Yes | ViT-B | 0.5 | 9.6G | 82.8 |
| No | Swin-B | 1.1 | 29.2G | 83.8 |
| Yes | Ssin-B | 0.7 | 20.2G | 83.1 |

It can be learned from content shown in Table 2 that, when the layer-wise training is performed on the model in this application, memory overheads and pre-training duration can be significantly reduced. The layer-wise training brings acceleration of 30% to 40%, reduces memory occupation by 40% to 55%, and does not reduce accuracy of the model.

The following describes a model training process in this application by using an example in which an encoding network is a Swin network (the Swin network includes four phases).

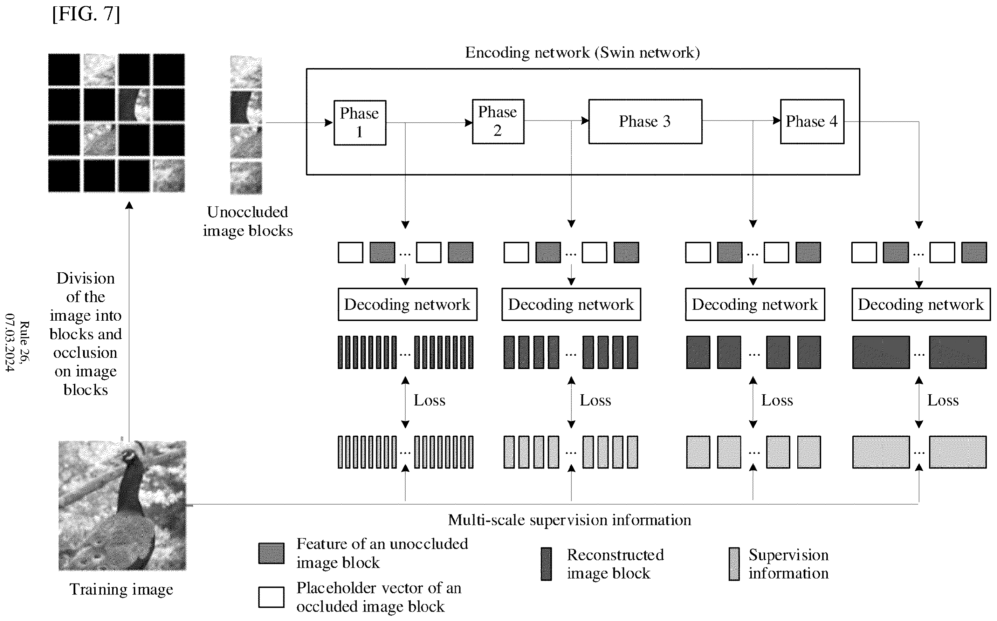

As shown in FIG. 7, a training image is first divided into image blocks, and occlusion is performed on the image blocks, to obtain a plurality of unoccluded image blocks (that is, second image blocks in this application). Then, features of the unoccluded images are input into the encoding network to perform encoding, to obtain an encoding feature corresponding to each phase in the encoding network, that is, obtain an encoding feature corresponding to each decoding network. A placeholder vector of an occluded image block is added to the encoding feature of each decoding network, to obtain a new encoding feature corresponding to each decoding network, and positional encoding (not shown in FIG. 7) is added to the new encoding feature, to obtain input data of each decoding network. The input data of each decoding network is input into each decoding network to perform image reconstruction, to obtain a reconstructed image (including a plurality of reconstructed image blocks) corresponding to each decoding network.

In addition, in this application, corresponding supervision information is further constructed for each decoding network. In other words, in this application, scales of supervision information of decoding networks at different depths are different. Next, a loss corresponding to each decoding network is determined based on the supervision information of each decoding network and the image block reconstructed by each decoding network. Finally, a model is trained based on the loss corresponding to each decoding network.

In an implementation of this application, after training of the model is completed, the encoding network is used as a backbone network for a downstream identification task. The downstream identification task includes one of the following: pedestrian attribute identification, image segmentation, and image classification. Specifically, the trained encoding network is used as the backbone network for the downstream identification task to perform feature extraction, to facilitate pedestrian attribute identification, image segmentation, and image classification.

Specifically, in an automated driving scenario, a road picture captured by a camera needs to be segmented, to obtain different objects such as a road surface, a roadbed, a vehicle, and a pedestrian from the picture through segmentation, to keep a vehicle traveling in a proper area. The encoding network in this application is used as a backbone network to perform semantic feature extraction on a picture, so that image segmentation precision can be improved. In an intelligent monitoring system, a pedestrian attribute needs to be identified from a picture captured by a camera. For example, a gender, an age, hair, wearing, and a backpack of a pedestrian are identified. The encoding network in this application is used as a backbone network to perform semantic feature extraction on the picture, so that pedestrian attribute identification precision can be improved.

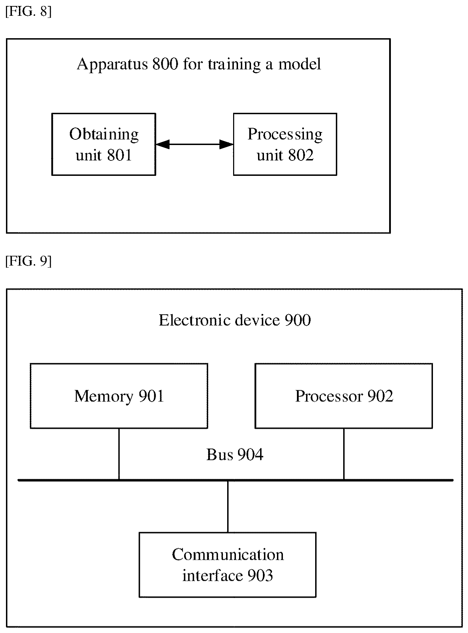

FIG. 8 is a diagram of an apparatus for training a model according to an embodiment of this application. As shown in FIG. 8, the apparatus for training the model includes an obtaining unit 801 and a processing unit 802.

The obtaining unit 801 is configured to obtain a training image.

The processing unit 802 is configured to: divide the training image into blocks, to obtain a plurality of first image blocks;

perform occlusion on the plurality of first image blocks, to obtain a plurality of second image blocks, where the plurality of second image blocks are unoccluded first image blocks in the plurality of first image blocks;
input a feature vector of each second image block into an encoding network to perform encoding, to obtain a plurality of encoding features corresponding to a plurality of network blocks, where the plurality of network blocks are in a one-to-one correspondence with the plurality of encoding features;
input each encoding feature into a decoding network corresponding to each encoding feature to perform image reconstruction, to obtain a reconstructed image corresponding to each decoding network; and
train the model based on the reconstructed image corresponding to each decoding network and supervision information corresponding to each decoding network.

For more detailed descriptions of the obtaining unit 801 and the processing unit 802, refer to related descriptions in the foregoing method embodiment. Details are not described herein again.

FIG. 9 is a diagram of an electronic device according to an embodiment of this application. The electronic device 900 may be the apparatus 800 for training the model. The electronic device 900 includes a memory 901, a processor 902, a communication interface 903, and a bus 904. The memory 901, the processor 902, and the communication interface 903 implement a communication connection to each other through the bus 904.

The memory 901 may be a read-only memory (Read Only Memory, ROM), a static storage device, a dynamic storage device, or a random access memory (Random Access Memory, RAM). The memory 901 may store a program. When the electronic device 900 is the apparatus 800 for training the model, and the program stored in the memory 901 is executed by the processor 902, the processor 902 and the communication interface 903 are configured to perform steps of the method for training the model in embodiments of this application.

The processor 902 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement the method for training the model in embodiments of this application.

The processor 902 may alternatively be an integrated circuit chip, and has a signal processing capability. In an implementation process, the steps of the data stream transmission method in this application may be implemented by using a hardware integrated logic circuit in the processor 902 or instructions in a form of software. The processor 902 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the method, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware coding processor, or may be performed and completed by using a combination of hardware in a coding processor and a software module. The software module may be located in a mature storage medium in the art, such as a random access memory, a flash memory, a read-only memory, a programmable read-only memory, an electrically erasable programmable memory, or a register. The storage medium is located in the memory 901, and the processor 902 reads information in the memory 901, to perform the steps of the method for training the model.

The communication interface 903 may be a transceiver apparatus such as a transceiver, to implement communication between the electronic device 900 and another device or a communication network. Alternatively, the communication interface 903 may be an input/output interface, to implement data transmission between the electronic device 900 and an input/output device. The input/output device includes but is not limited to a keyboard, a mouse, a display screen, a USB flash drive, and a hard disk. For example, the processor 902 may obtain a speech sample through the communication interface 903.

The bus 904 may include a channel for transferring information between various components (for example, the memory 901, the processor 902, and the communication interface 903) of the apparatus electronic device 900.

It should be noted that, although only a memory, a processor, and a communication interface are shown in the electronic device 900 shown in FIG. 9, in a specific implementation process, a person skilled in the art should understand that the electronic device 900 further includes another component required for implementing normal operation. In addition, according to a specific requirement, a person skilled in the art should understand that the electronic device 900 may further include a hardware component for implementing another additional function. In addition, a person skilled in the art should understand that, the electronic device 900 may include only a component necessary for implementing embodiments of this application, and does not need to include all the components shown in FIG. 9.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to an actual requirement to achieve objectives of solutions of embodiments.

In addition, functional units in embodiments of this application may be integrated into one processing unit, or each of the units may exist alone physically, or two or more units may be integrated into one unit.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and an execution sequence of the processes should be determined based on functions and internal logic of the processes.

When the functions are implemented in a form of software functional unit and sold or used as an independent product, the functions may be stored in a computer-readable storage medium. Based on such an understanding, the technical solutions in this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for training a model, wherein the model comprises an encoding network and a plurality of decoding networks, the encoding network comprises a plurality of network blocks at different depths, each network block corresponds to one decoding network in the plurality of decoding networks, each network block comprises one or more network layers, and the method comprises:

   dividing a training image into blocks, to obtain a plurality of first image blocks;
   performing occlusion on the plurality of first image blocks, to obtain a plurality of second image blocks, wherein the plurality of second image blocks are unoccluded first image blocks in the plurality of first image blocks;
   inputting a feature vector of each second image block into the encoding network to perform encoding, to obtain a plurality of encoding features corresponding to the plurality of network blocks, wherein the plurality of network blocks are in a one-to-one correspondence with the plurality of encoding features;
   inputting each encoding feature into a decoding network corresponding to each encoding feature to perform image reconstruction, to obtain a reconstructed image corresponding to each decoding network; and
   training the model based on the reconstructed image corresponding to each decoding network and supervision information corresponding to each decoding network.

2. The method according to claim 1, wherein the performing occlusion on the plurality of first image blocks, to obtain a plurality of second image blocks comprises:

generating an index value corresponding to each first image block, wherein the index value of each first image block indicates whether each first image block is occluded; and

performing the occlusion on the plurality of first image blocks based on the index value of each first image block, to obtain the plurality of second image blocks.

3. The method according to claim 2, wherein before the training the model based on the reconstructed image corresponding to each decoding network and supervision information corresponding to each decoding network, the method further comprises:

obtaining a block division scale corresponding to each decoding network, wherein a smaller depth of a network block corresponding to a decoding network indicates a smaller block division scale corresponding to the decoding network;

dividing the training image into blocks based on the block division scale corresponding to each decoding network, to obtain a plurality of third image blocks corresponding to each decoding network; and

using the plurality of third image blocks corresponding to each decoding network as the supervision information of each decoding network.

4. The method according to claim 3, wherein
the reconstructed image corresponding to each decoding network comprises a plurality of fourth image blocks, and
the training the model based on the reconstructed image corresponding to each decoding network and supervision information corresponding to each decoding network comprises:

determining a third image block corresponding to each fourth image block in the plurality of fourth image blocks corresponding to each decoding network based on the plurality of third image blocks in the supervision information of each decoding network;

determining a loss of each decoding network based on each fourth image block corresponding to each decoding network and the third image block corresponding to the fourth image block; and

training the model based on the loss of each decoding network.

5. The method according to claim 4, wherein before the determining a loss of each decoding network based on each fourth image block corresponding to each decoding network and the third image block corresponding to the fourth image block, the method further comprises:

generating a first index value vector based on the index value of each first image block; and

inputting the first index value vector into the model, to obtain a second index value vector corresponding to each decoding network; and

the determining a loss of each decoding network based on a fourth image block corresponding to each decoding network and the third image block corresponding to the fourth image block comprises:

determining an index value of each fourth image block corresponding to each decoding network based on the second index value vector corresponding to each decoding network, wherein the index value of each fourth image block indicates whether real content corresponding to each fourth image block is occluded; and

determining the loss corresponding to each decoding network based on each fourth image block corresponding to each decoding network, the index value corresponding to the fourth image block, and the third image block corresponding to the fourth image block.

6. The method according to claim 4 or 5, wherein

the loss corresponding to each decoding network is determined based on feature information of each fourth image block corresponding to each decoding network and feature information of the third image block corresponding to the fourth image block; and

feature information of an image block A is one of the following:

a pixel value of each pixel in the image block A, a histogram of oriented gradients of the image block A, or a normalized pixel value of the image block A, wherein the image block A is a fourth image block corresponding to each decoding network or a third image block corresponding to the fourth image block.

7. The method according to any one of claims 1 to 6, wherein the method further comprises:

after training of the model is completed, using the encoding network as a backbone network for a downstream identification task, wherein
the downstream identification task comprises one of the following: pedestrian attribute identification, image segmentation, and image classification.

8. An apparatus for training a model, wherein the model comprises an encoding network and a plurality of decoding networks, the encoding network comprises a plurality of network blocks at different depths, each network block corresponds to one decoding network in the plurality of decoding networks, each network block comprises one or more network layers, and the apparatus for training the model comprises an obtaining unit and a processing unit;

the obtaining unit is configured to obtain a training image; and
the processing unit is configured to: divide the training image into blocks, to obtain a plurality of first image blocks; perform occlusion on the plurality of first image blocks, to obtain a plurality of second image blocks, wherein the plurality of second image blocks are unoccluded first image blocks in the plurality of first image blocks; input a feature vector of each second image block into the encoding network to perform encoding, to obtain a plurality of encoding features corresponding to the plurality of network blocks, wherein the plurality of network blocks are in a one-to-one correspondence with the plurality of encoding features; input each encoding feature into a decoding network corresponding to each encoding feature to perform image reconstruction, to obtain a reconstructed image corresponding to each decoding network; and train the model based on the reconstructed image corresponding to each decoding network and supervision information corresponding to each decoding network.

9. The apparatus according to claim 8, wherein in the aspect of performing the occlusion on the plurality of first image blocks, to obtain the plurality of second image blocks, the processing unit is specifically configured to:

generate an index value corresponding to each first image block, wherein the index value of each first image block indicates whether each first image block is occluded; and
perform the occlusion on the plurality of first image blocks based on the index value of each first image block, to obtain the plurality of second image blocks.

10. The apparatus according to claim 9, wherein before the processing unit trains the model based on the reconstructed image corresponding to each decoding network and the supervision information corresponding to each decoding network, the processing unit is further configured to:

obtain a block division scale corresponding to each decoding network, wherein a smaller depth of a network block corresponding to a decoding network indicates a smaller block division scale corresponding to the decoding network;
divide the training image into blocks based on the block division scale corresponding to each decoding network, to obtain a plurality of third image blocks corresponding to each decoding network; and
use the plurality of third image blocks corresponding to each decoding network as the supervision information of each decoding network.

11. The apparatus according to claim 10, wherein the reconstructed image corresponding to each decoding network comprises a plurality of fourth image blocks, and in the aspect of training the model based on the reconstructed image corresponding to each decoding network and the supervision information corresponding to each decoding network, the processing unit is specifically configured to:

determine a third image block corresponding to each fourth image block in the plurality of fourth image blocks corresponding to each decoding network based on the plurality of third image blocks in the supervision information of each decoding network;
determine a loss of each decoding network based on each fourth image block corresponding to each decoding network and the third image block corresponding to the fourth image block; and
train the model based on the loss of each decoding network.

12. The apparatus according to claim 11, wherein before the processing unit determines the loss of each decoding network based on each fourth image block corresponding to each decoding network and the third image block corresponding to the fourth image block, the processing unit is further configured to:

generate a first index value vector based on the index value of each first image block; and
input the first index value vector into the model, to obtain a second index value vector corresponding to each decoding network; and
in the aspect of determining the loss of each decoding network based on the fourth image block corresponding to each decoding network and the third image block corresponding to the fourth image block, the processing unit is specifically configured to:

determine an index value of each fourth image block corresponding to each decoding network based on the second index value vector corresponding to each decoding network, wherein the index value of each fourth image block indicates whether real content corresponding to each fourth image block is occluded; and
determine the loss corresponding to each decoding network based on each fourth image block corresponding to each decoding network, the index value corresponding to the fourth image block, and the third image block corresponding to the fourth image block.

13. The apparatus according to claim 11 or 12, wherein

the loss corresponding to each decoding network is determined based on feature information of each fourth image block corresponding to each decoding network and feature information of the third image block corresponding to the fourth image block; and
feature information of an image block A is one of the following:
a pixel value of each pixel in the image block A, a histogram of oriented gradients of the image block A, or a normalized pixel value of the image block A, wherein the image block A is a fourth image block corresponding to each decoding network or a third image block corresponding to the fourth image block.

14. The apparatus according to any one of claims 8 to 13, wherein the processing unit is further configured to:

after training of the model is completed, use the encoding network as a backbone network for a downstream identification task, wherein
the downstream identification task comprises one of the following: pedestrian attribute identification, image segmentation, and image classification.

15. An electronic device, comprising: a memory, configured to store a program; and a processor, configured to execute the program stored in the memory, wherein when the program stored in the memory is executed, the processor is configured to implement the method according to any one of claims 1 to 7.

16. A computer-readable storage medium, wherein the computer-readable storage medium stores program code to be executed by a device, and the program code is used to implement the method according to any one of claims 1 to 7.

[FIG. 1]

Input image

Encoding result

Placeholder vector

Encoder

Decoder

Predicted image

[FIG. 2]

Model

Encoding network

Phase 1

Phase 2

Phase N

Network block 1

Network block 2

...

Network block N

Decoding network 1

Decoding network 2

...

Decoding network N

[FIG. 3]

| Divide a training image into blocks, to obtain a plurality of first image blocks | 301 |

↓

| Perform occlusion on the plurality of first image blocks, to obtain a plurality of second image blocks, where the plurality of second image blocks are unoccluded first image blocks in the plurality of first image blocks | 302 |

↓

| Input a feature vector of each second image block into an encoding network to perform encoding, to obtain a plurality of encoding features corresponding to a plurality of network blocks, where the plurality of network blocks are in a one-to-one correspondence with the plurality of encoding features | 303 |

↓

| Input each encoding feature into a decoding network corresponding to each encoding feature to perform image reconstruction, to obtain a reconstructed image corresponding to each decoding network | 304 |

↓

| Train a model based on the reconstructed image corresponding to each decoding network and supervision information corresponding to each decoding network | 305 |

[FIG. 4]

Training image → Even division into non-overlapping blocks → A plurality of first image blocks → Random occlusion → Second image block

[FIG. 5]

Supervision
information of
a decoding
network 1

Block division
scale 1

Training image

Block division scale 2

...

Supervision
information of
a decoding
network 2

...

Block division
scale N

Supervision
information of
a decoding
network N

[FIG. 6]

| 1 | 1 | 1 | 0 | 0 | 0 |
|---|---|---|---|---|---|
| 1 | 1 | 1 | 0 | 0 | 0 |
| 1 | 1 | 1 | 0 | 0 | 0 |
| 1 | 1 | 1 | 1 | 1 | 1 |
| 1 | 1 | 1 | 1 | 1 | 1 |
| 1 | 1 | 1 | 1 | 1 | 1 |

Second index value
matrix of a
decoding network 1

| 1 | 0 |
|---|---|
| 1 | 1 |

First index value
matrix

Input into a
model

| 1 | 1 | 0 |
|---|---|---|
| 1 | 1 | 1 |
| 1 | 1 | 1 |

Second index value
matrix of a
decoding network 2

...

| 1 | 0 |
|---|---|
| 1 | 1 |

Second index value
matrix of a
decoding network N

[FIG. 7]

Encoding network (Swin network)

Phase 1 → Phase 2 → Phase 3 → Phase 4

Division of the image into blocks and occlusion on image blocks

Unoccluded image blocks

Decoding network  Decoding network  Decoding network  Decoding network

Loss  Loss  Loss  Loss

Training image

Multi-scale supervision information

Feature of an unoccluded image block

Placeholder vector of an occluded image block

Reconstructed image block

Supervision information

[FIG. 8]

Apparatus 800 for training a model

| Obtaining unit 801 | ←→ | Processing unit 802 |

[FIG. 9]

Electronic device 900

| Memory 901 |  | Processor 902 |

Bus 904

Communication interface 903

## INTERNATIONAL SEARCH REPORT

| International application No. |
|---|
| **PCT/CN2024/078005** |

### A. CLASSIFICATION OF SUBJECT MATTER

G06T7/10(2017.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS: CNTXT; DWPI; SIPOABS; USTXT; CNKI; IEEE: 编码, 解码, 多个, 网络块, 图像, 分块, 分割, 切分, 划分, 重构, 重建, encoder, decoder, multiple, several, network block, image, divide, partition, reconstruction

### C. DOCUMENTS CONSIDERED TO BE RELEVANT

| Category* | Citation of document, with indication, where appropriate, of the relevant passages | Relevant to claim No. |
|---|---|---|
| PX | CN 116258727 A (HUAWEI TECHNOLOGIES CO., LTD.) 13 June 2023 (2023-06-13) description, paragraphs 4-28 | 1-16 |
| A | CN 114207673 A (SENSETIME PVT. LTD.) 18 March 2022 (2022-03-18) description, paragraphs 80-91, 114, and 182 | 1-16 |
| A | CN 114079776 A (GUANGDONG OPPO MOBILE COMMUNICATIONS CO., LTD.) 22 February 2022 (2022-02-22) entire document | 1-16 |
| A | CN 113113119 A (SHENZHEN INSTITUTES OF ADVANCED TECHNOLOGY, CHINESE ACADEMY OF SCIENCES) 13 July 2021 (2021-07-13) entire document | 1-16 |
| A | CN 111862127 A (GUANGDONG OPPO MOBILE COMMUNICATIONS CO., LTD.) 30 October 2020 (2020-10-30) entire document | 1-16 |
| A | JP 2019201332 A (SHARP K. K.) 21 November 2019 (2019-11-21) entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 April 2024** | **08 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/078005**

| Patent document cited in search report | | | Publication date (day/month/year) | Patent family member(s) | | | Publication date (day/month/year) |
|---|---|---|---|---|---|---|---|
| CN | 116258727 | A | 13 June 2023 | None | | | |
| CN | 114207673 | A | 18 March 2022 | AU | 2021290429 | A1 | 10 February 2022 |
| | | | | WO | 2023118936 | A1 | 29 June 2023 |
| | | | | US | 2022122351 | A1 | 21 April 2022 |
| CN | 114079776 | A | 22 February 2022 | WO | 2022037162 | A1 | 24 February 2022 |
| | | | | TW | 202209885 | A | 01 March 2022 |
| CN | 113113119 | A | 13 July 2021 | WO | 2022199137 | A1 | 29 September 2022 |
| CN | 111862127 | A | 30 October 2020 | WO | 2022017025 | A1 | 27 January 2022 |
| JP | 2019201332 | A | 21 November 2019 | None | | | |

Form PCT/ISA/210 (patent family annex) (July 2022)

**REFERENCES CITED IN THE DESCRIPTION**

**Patent documents cited in the description**

• CN 202310183197